# EUROPEAN PATENT APPLICATION

(11) **EP 4 789 918 A1**
(43) Date of publication of application: **12.08.2026**
(21) Application number: 24874750.3
(22) Date of filing: 04.10.2024
(51) Int. Cl.: B60Q 1/00

(54) **ROAD SURFACE DRAWING DEVICE FOR VEHICLE AND HEADLIGHT FOR VEHICLE**

(30) Priority: 04.10.2023 JP 2023172994
(71) Applicant: Koito Manufacturing Co., Ltd., Tokyo 141-0001 (JP)
(72) Inventor: OHSHIO, Hirohiko, Shizuoka-shi, Shizuoka 424-8764 (JP)
(74) Representative: Grünecker Patent- und Rechtsanwälte PartG mbB
(86) International application number: PCT/JP2024/035627
(87) International publication number: WO 2025/075150

(57) **Abstract**

A road surface drawing device (1) for a vehicle displays a road surface drawing pattern (P) along a road ahead of a vehicle (100) in which said device is installed. The road surface drawing pattern (P) changes in accordance with the steering angle of the vehicle (100), the vehicle speed, and the angular velocity of the steering angle.

## Description

### TECHNICAL FIELD

The present disclosure relates to a road surface rendering device for vehicle and a vehicle headlamp.

### BACKGROUND ART

Patent Literature 1 discloses a road surface rendering device that is mounted on a vehicle or the like and displays a traveling direction of the vehicle by irradiating a road surface with a road surface rendering pattern.

### CITATION LIST

### PATENT LITERATURE

Patent Literature 1: JP2021-79835A

### SUMMARY OF INVENTION

### TECHNICAL PROBLEM

The road surface rendering device displays a road surface rendering pattern having a curved outer edge line along a traveling lane. The curved outer edge line of the road surface rendering pattern is determined by a steering angle obtained from a steering device of the vehicle.

However, a curvature of the road surface is not always constant. For example, a curved road includes not only a curve section in which the curvature is constant but also a transition curve section in which the curvature gradually changes. For this reason, in control by the steering angle, the curvature of the road surface rendering pattern may deviate in the transition curve section, and the road surface rendering pattern along the road may fail to be displayed.

An object of the present disclosure is to provide a road surface rendering device for vehicle and a vehicle headlamp that display a road surface rendering pattern matching a course of the vehicle.

### SOLUTION TO PROBLEM

According to one aspect of the present disclosure, there is provided a road surface rendering device for vehicle that displays a road surface rendering pattern along a road in front of a vehicle on which the road surface rendering device is mounted, in which the road surface rendering pattern changes according to a steering angle, a vehicle speed, and an angular velocity of the steering angle of the vehicle.

According to another aspect of the present disclosure, there is provided a vehicle headlamp including the above-described road surface rendering device for vehicle and a headlamp unit that illuminates an area in front of the vehicle.

### ADVANTAGEOUS EFFECTS OF INVENTION

According to the present disclosure, it is possible to provide a road surface rendering device for vehicle and a vehicle headlamp that display a road surface rendering pattern matching a course of a vehicle.

### BRIEF DESCRIPTION OF DRAWINGS

FIG. 1 illustrates a road surface rendering device and a road surface rendering pattern according to a first embodiment.
FIG. 2 is a cross-sectional view of the road surface rendering device according to the first embodiment.
FIG. 3 is a block configuration diagram of a vehicle and the road surface rendering device according to the first embodiment.
FIG. 4 illustrates a road surface rendering pattern in a transition curve section.
FIG. 5 illustrates a road surface rendering pattern in the transition curve section.
FIG. 6 illustrates a road surface rendering pattern in a curve section.
FIG. 7 illustrates a road surface rendering pattern in a comparative example.
FIG. 8 illustrates a road surface rendering pattern according to a second embodiment in the transition curve section.
FIG. 9 illustrates a road surface rendering pattern according to the second embodiment in the transition curve section.
FIG. 10 illustrates a road surface rendering device according to Modification 1.
FIG. 11 illustrates a road surface rendering device according to Modification 2.

### DESCRIPTION OF EMBODIMENTS

Hereinafter, embodiments of the present disclosure will be described with reference to the drawings. For convenience of description, description on members having the same reference numerals as those already described in the description of the embodiments will be omitted. Further, for convenience of description, dimensions of members illustrated in the drawings may be different from actual dimensions of the members.

In the description of the embodiments, a "left-right direction", a "front-rear direction", and an "upper-lower direction" may be appropriately referred to for convenience of description. The "upper-lower direction" is a direction including an "upward direction" and a "downward direction". The "front-rear direction" is a direction including a "forward direction" and a "rearward direction". The "left-right direction" is a direction including a "leftward direction" and a "rightward direction". A reference numeral U illustrated in the drawings to be described later indicates the upward direction. A reference character D indicates the downward direction. A reference character F indicates the forward direction. A reference character B indicates the rearward direction. A reference character L indicates a leftward direction. A reference character R indicates the rightward direction.

### (First Embodiment)

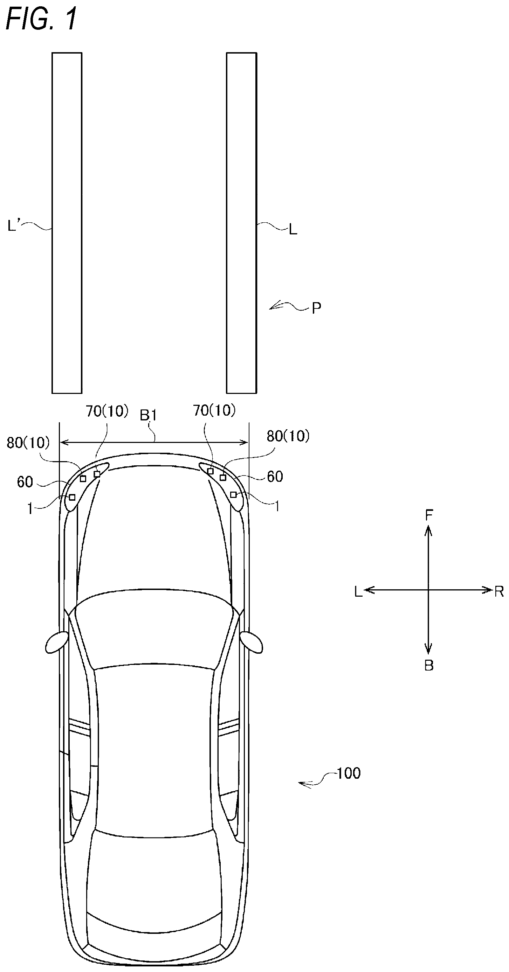

A road surface rendering device 1 according to the first embodiment provided in a vehicle 100 will be described with reference to FIG. 1. FIG. 1 illustrates the road surface rendering device 1 and a road surface rendering pattern P according to the first embodiment.

In the example of FIG. 1, the road surface rendering device 1 is stored in a headlamp 60 mounted on the vehicle 100. The road surface rendering device 1 is an example of a road surface rendering device for vehicle. The headlamp 60 is an example of a vehicle headlamp. The road surface rendering device 1 illuminates a road surface with light and displays the road surface rendering pattern P along a road in front of a vehicle on which the road surface rendering device 1 is mounted. In the present embodiment, the road surface rendering pattern P is constituted by two main lines having a constant width and displayed in front right and left of the vehicle 100. The road surface rendering pattern P has outer edge lines L, L' separated by a vehicle width B1 or more. The outer edge line L indicates a right edge of the road surface rendering pattern P displayed on a right side, and the outer edge line L' indicates a left edge of the road surface rendering pattern P displayed on a left side.

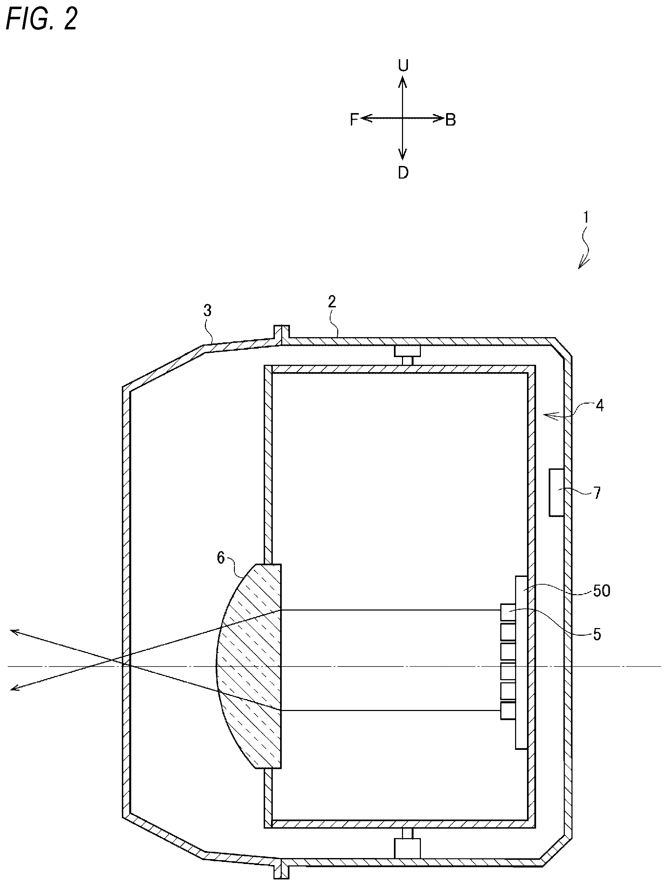

FIG. 2 is a cross-sectional view of the road surface rendering device 1 according to the first embodiment. The road surface rendering device 1 includes a lamp body 2 having an opening on a lamp front side, and a transparent outer cover 3 covering the opening of the lamp body 2. The lamp body 2 and the outer cover 3 define a lamp chamber 4, in which a plurality of light sources 5, an optical member 6, and a road surface rendering control unit 7 are accommodated.

The light source 5 is implemented by, for example, a light emitting diode (LED) element or a laser diode (LD) element. The light source 5 may be implemented by a semiconductor light emitting element that emits laser light.

The light source 5 is mounted on a substrate 50. The substrate 50 may be formed of, for example, a glass material such as silica glass, borosilicate silicate glass, and non-alkali borosilicate silicate glass, or a resin material such as polyethylene terephthalate, polyethylene naphthalate, polypropylene, and a cycloolefin polymer. The light sources 5 are arranged in a matrix on the substrate 50.

The optical member 6 refracts light emitted from the light source 5 and emits the light toward the road surface. The optical member 6 is, for example, a plano-convex lens in which a front surface is a convex surface and a rear surface is a flat surface. The optical member 6 may be formed of a translucent material such as a transparent resin such as acrylic. The light source 5 can individually change illuminance during lighting by changing a duty ratio or the like. In this example, a lighting pattern of the light sources 5 arranged in a matrix is displayed on the road surface as a road surface rendering pattern.

The road surface rendering control unit 7 controls turning on and off of the light sources 5. The road surface rendering control unit 7 controls the plurality of light sources 5 to generate a desired image on the road surface by individually controlling turning on and off of the plurality of light sources 5. Details of operation of the road surface rendering control unit 7 will be described later.

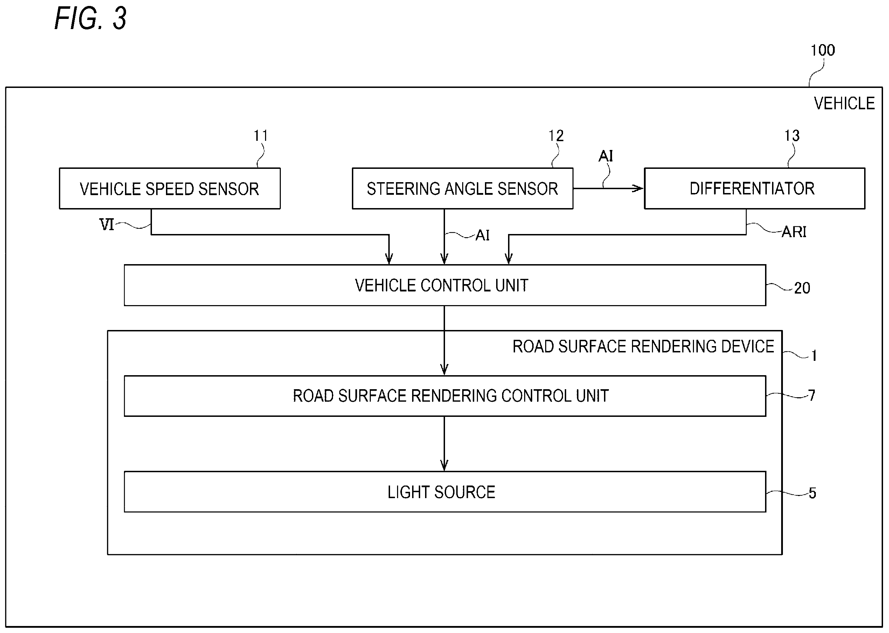

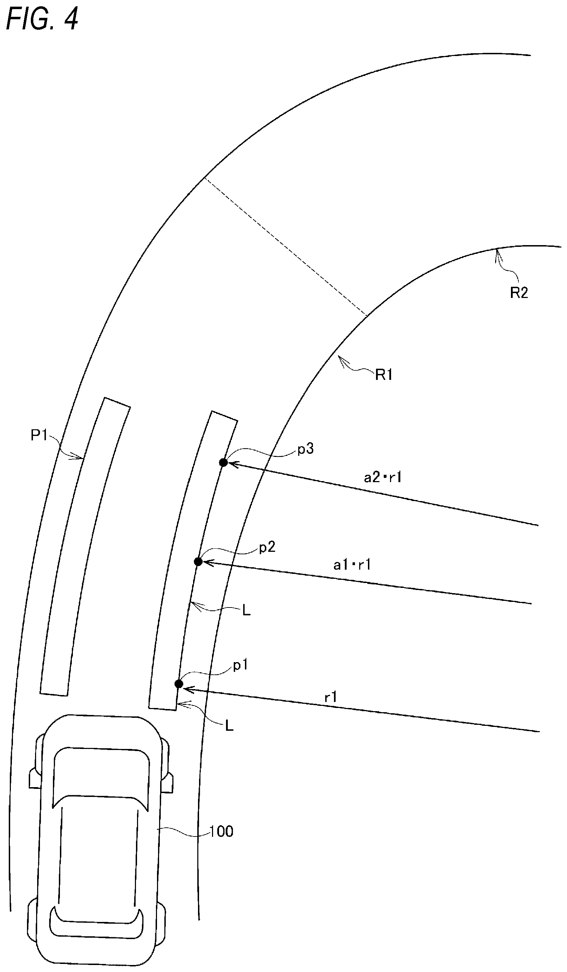

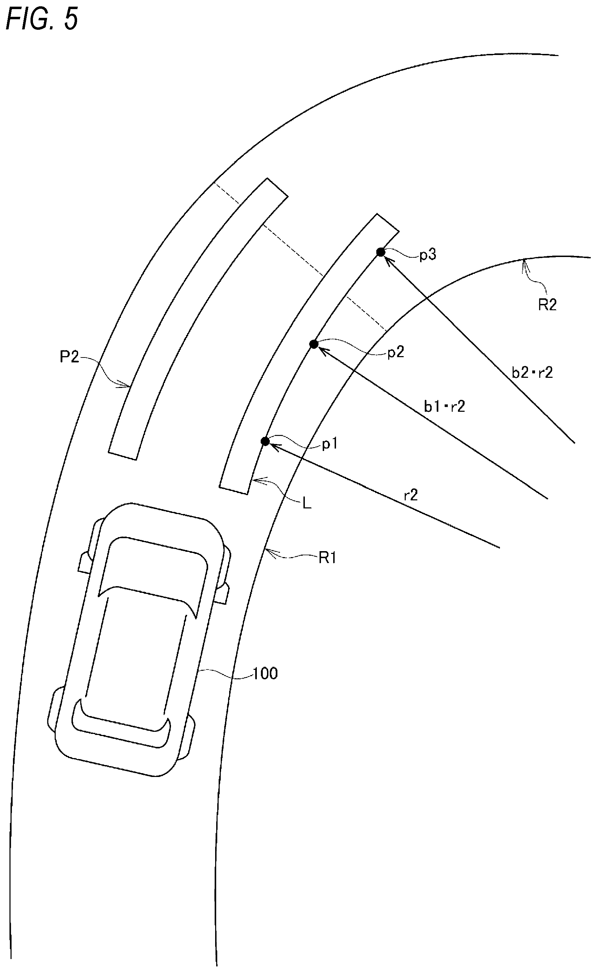

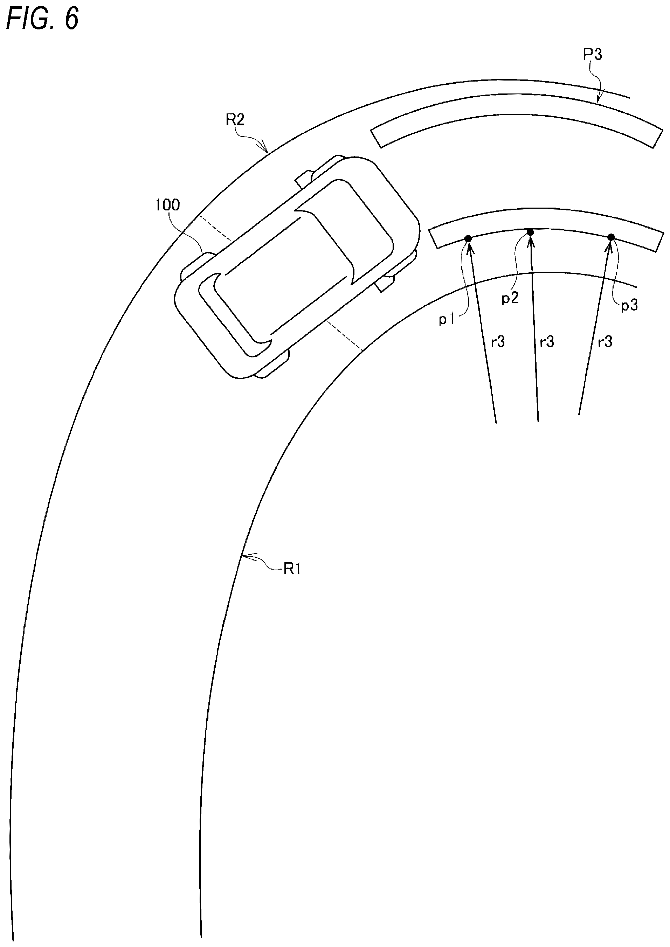

Next, the road surface rendering pattern P according to the first embodiment will be described with reference to FIGS. 3 to 6. FIG. 3 is a block configuration diagram of the vehicle 100 and the road surface rendering device 1 according to the first embodiment. FIG. 4 illustrates a road surface rendering pattern P1 in a transition curve section R1. FIG. 5 illustrates a road surface rendering pattern P2 in the transition curve section R1. FIG. 6 illustrates a road surface rendering pattern P3 in a curve section R2. In the road surface rendering device 1 according to the present embodiment, the road surface rendering patterns P1 to P3 change according to a steering angle, a vehicle speed, and an angular velocity of the steering angle of the vehicle 100.

As illustrated in FIG. 3, the vehicle 100 includes a vehicle speed sensor 11, a steering angle sensor 12, a differentiator 13, and a vehicle control unit 20. The vehicle speed sensor 11 acquires the speed of the traveling vehicle 100 and transmits vehicle speed information VI including the vehicle speed to the vehicle control unit 20. The steering angle sensor 12 acquires the steering angle of the traveling vehicle 100 and transmits steering angle information AI including the steering angle to the vehicle control unit 20 and the differentiator 13. The differentiator 13 time-differentiates the received steering angle information AI to calculate the angular velocity of the steering angle. The differentiator 13 transmits angular velocity information ARI including the angular velocity of the steering angle to the vehicle control unit 20.

The vehicle control unit 20 calculates a radius of curvature of a course of the vehicle 100 based on the vehicle speed information VI and the steering angle information AI. Further, the vehicle control unit 20 calculates a change rate of the radius of curvature of the course on which the vehicle 100 is intended to travel based on the vehicle speed information VI, the steering angle information AI, and the angular velocity information ARI.

The road surface rendering control unit 7 controls the light sources 5 to change the road surface rendering patterns P1 to P3 based on the radius of curvature of the course and the change rate of the radius of curvature of the course calculated by the vehicle control unit 20.

As illustrated in FIGS. 4 to 6, the road may include the transition curve section R1 and the curve section R2. The curve section R2 is a section that curves with a constant radius of curvature. The transition curve section R1 is a section connecting a straight line section (not illustrated) and the curve section R2 or connecting curve sections. The transition curve section R1 has a radius of curvature that gradually changes to be equal to the radius of curvature of the curve section. The transition curve section R1 is provided such that an operation on the steering angle by a driver would not become excessively steep. That is, the transition curve section R1 is a section in which the radius of curvature monotonically increases or monotonically decreases gradually.

Since the radius of curvature of the transition curve section R1 gradually changes, the vehicle 100 traveling in the transition curve section R1 travels such that the angular velocity of the steering angle is a certain value or more. On the other hand, since radii of curvature of the curve section R2 and the straight line section do not change, the vehicle 100 traveling in the curve section R2 and the straight line section travels such that the angular velocity of the steering angle is substantially zero.

The road surface rendering patterns P1 to P3 displayed from the vehicle 100 traveling in the transition curve section R1 and the curve section R2 will be described. In FIGS. 4 to 6, to describe curvatures of the road surface rendering patterns P1 to P3, radii of curvature of the outer edge lines L at points p1, p2, and p3 are illustrated. The points p1, p2, and p3 are set as points on the outer edge lines L on the right side when viewed from the vehicle 100 in the road surface rendering patterns P1 to P3. The outer edge line L extends in the forward direction of the vehicle 100, and is an example of a curve extending in the forward direction of the vehicle 100. The point p1 is set to be closer to the vehicle 100 than the points p2, p3. The point p2 is set to be closer to the vehicle 100 than the point p3.

As illustrated in FIG. 4, the radius of curvature of the outer edge line L of the road surface rendering pattern P1 at the point p1 is r1. The radius of curvature r1 is a radius of curvature calculated based on the vehicle speed information VI and the steering angle information AI.

As illustrated in FIG. 4, the radius of curvature of the outer edge line L of the road surface rendering pattern P1 at the points p2, p3 is set to gradually decrease as the radius of curvature of the course decreases. The radius of curvature of the outer edge line L of the road surface rendering pattern P1 at the point p2 is a1 · r1. The radius of curvature of the outer edge line L of the road surface rendering pattern P1 at the point p3 is a2 · r1. Here, a1 and a2 are coefficients for correcting the radius of curvature of the road surface rendering pattern P1. These coefficients are determined by a change rate of the radius of curvature of the course calculated based on the vehicle speed information VI, the steering angle information AI, and the angular velocity information ARI. As illustrated in FIG. 4, 0 < a2 < a1 < 1 when the radius of curvature of the course decreases, and a2 > a1 > 1 when the radius of curvature of the course increases.

By displaying the outer edge line L in this manner, it is possible to display the outer edge line L along the road in front of the vehicle 100 on which the road surface rendering device 1 is mounted.

In the example of FIG. 5, the vehicle 100 is traveling in a state in which the steering angle is larger than that in the example of FIG. 4.

As illustrated in FIG. 5, the radius of curvature of the outer edge line L of the road surface rendering pattern P2 at the point p1 is r2. The radius of curvature r2 is a radius of curvature calculated based on the vehicle speed information VI and the steering angle information AI. In the examples of FIGS. 4 and 5, r2 < r1.

As illustrated in FIG. 5, the radius of curvature of the outer edge line L of the road surface rendering pattern P2 at the points p2, p3 is set to gradually decrease as the radius of curvature of the course decreases. The radius of curvature of the outer edge line L of the road surface rendering pattern P2 at the point p2 is b1 · r2. The radius of curvature of the outer edge line L of the road surface rendering pattern P2 at the point p3 is b2 · r2. Here, b1 and b2 are coefficients for correcting the radius of curvature of the road surface rendering pattern P2. These coefficients are determined by the change rate of the radius of curvature of the course calculated based on the vehicle speed information VI, the steering angle information AI, and the angular velocity information ARI. As illustrated in FIG. 5, 0 < b2 < b1 < 1 when the radius of curvature of the path decreases, and b2 > b1 > 1 when the radius of curvature of the course increases.

When the angular velocity of the steering angle is smaller in the case illustrated in FIG. 5 than in the case illustrated in FIG. 4, a decrease rate of the curvature of the outer edge line L in FIG. 5 is smaller than a decrease rate of the curvature of the outer edge line L in FIG. 4. For this reason, the road surface rendering pattern P2 is displayed such that a1 < b1 and a2 < b2 in terms of the coefficients a1, a2, b1, and b2.

Conversely, when the angular velocity of the steering angle is larger in the case illustrated in FIG. 5 than in the case illustrated in FIG. 4, the decrease rate of the curvature of the outer edge line L in FIG. 5 is larger than the decrease rate of the curvature of the outer edge line L in FIG. 4. For this reason, the road surface rendering pattern P2 is displayed such that b1 < a1 and b2 < a2 in terms of the coefficients a1, a2, b1, and b2.

On the other hand, in the example of FIG. 6, the vehicle 100 travels in a state in which the steering angle is larger than that in the example of FIG. 5. However, since the vehicle 100 is traveling in the curve section R2, the angular velocity of the steering angle is substantially zero.

As illustrated in FIG. 6, the radius of curvature of the outer edge line L of the road surface rendering pattern P3 at the points p1, p2, and p3 is r3. The radius of curvature r3 is calculated based on the vehicle speed information VI and the steering angle information AI, and may not be calculated based on the angular velocity information ARI. Note that r3 < r2 < r1.

By displaying the outer edge line L in this manner, it is possible to display the outer edge line L along the road in front of the vehicle 100 on which the road surface rendering device 1 is mounted even when the steering angle changes.

The road surface rendering patterns P1, P2 along the road in front of the vehicle 100 on which the road surface rendering device 1 is mounted can be displayed by similarly displaying outer edge lines extending in the forward direction of the vehicle other than the outer edge lines L.

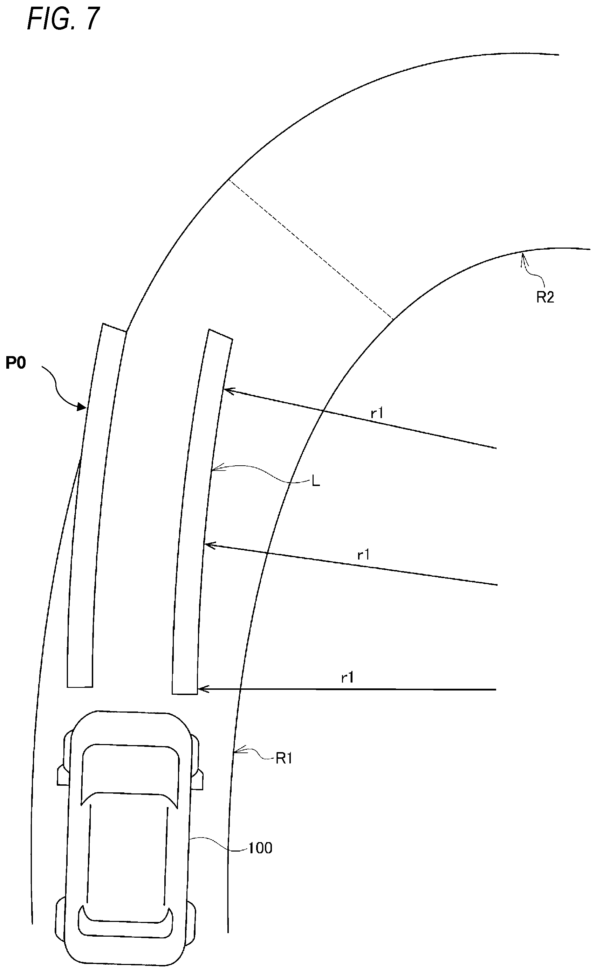

FIG. 7 illustrates a road surface rendering pattern P0 according to a comparative example. In the example of FIG. 7, the vehicle 100 travels in the same place as that in the example of FIG. 4 in the transition curve section R1.

The road surface rendering pattern P0 according to the comparative example is displayed according to only the vehicle speed and the steering angle of the vehicle 100. For this reason, in the example of FIG. 7, the radius of curvature of the outer edge line L at any one of the points p1, p2, and p3 is r1.

However, since the transition curve section R1 is a section in which the radius of curvature gradually changes, the road surface rendering pattern P0 may deviate from the intended course of the vehicle 100. For example, the radius of curvature of the course in the example of FIG. 7 gradually decreases. In this case, the road surface rendering pattern P0 does not change in the forward direction of the vehicle 100, and thus the road surface rendering pattern P0 is displayed to extend outside the intended course.

In contrast, according to the road surface rendering device 1 in the present embodiment, the road surface rendering patterns P1, P2 change according to the steering angle, the vehicle speed, and the angular velocity of the steering angle. For this reason, even when the curvature of the road in front of the vehicle 100 gradually changes, the road surface rendering device 1 easily displays the road surface rendering patterns P1, P2 along the road.

In the road surface rendering device 1, a threshold related to the angular velocity of the steering angle may be set. When the angular velocity of the steering angle is equal to or greater than the threshold, the road surface rendering control unit 7 determines that the vehicle 100 is traveling in the transition curve section R1, and controls the light source 5 to display the road surface rendering patterns P1, P2 according to the steering angle, the vehicle speed, and the angular velocity of the steering angle. When the angular velocity of the steering angle is less than the threshold, the road surface rendering control unit 7 determines that the vehicle 100 is traveling in the curve section R2, and controls the light source 5 to display the road surface rendering pattern P3 according to the steering angle and the vehicle speed.

According to the road surface rendering device 1, when the angular velocity of the steering angle of the vehicle 100 is large, the road surface rendering patterns P1, P2 in accordance with the angular velocity of the steering angle can be displayed. For this reason, even when the curvature of the course of the vehicle gradually changes, the road surface rendering device 1 easily displays the road surface rendering patterns P1, P2 matching the course of the vehicle 100.

When the vehicle 100 is traveling in the straight line section or the curve section R2, the angular velocity of the steering angle is substantially zero, but actually the vehicle 100 travels while correcting the steering angle each time, and thus the angular velocity of the steering angle may not be zero. In this case, when a road surface rendering pattern is formed in consideration of the angular velocity of the steering angle, the road surface rendering pattern may be displayed in a fluctuating manner. In the road surface rendering device 1 according to the present embodiment, when the angular velocity of the steering angle is less than the threshold, the angular velocity of the steering angle is not considered for the formation of the road surface rendering pattern, and thus the display of the road surface rendering pattern P3 is less likely to fluctuate even when the vehicle 100 travels in the straight line section or the curve section R2.

As illustrated in FIG. 6, when the angular velocity of the steering angle is smaller than the threshold, the road surface rendering pattern P3 is displayed such that the radius of curvature of the outer edge line L is constant in accordance with the vehicle speed and the steering angle of the vehicle 100. On the other hand, as illustrated in FIGS. 4 and 5, when the angular velocity of the steering angle is equal to or greater than the threshold, the curvature of the outer edge line L increases or decreases in the forward direction of the vehicle 100 according to the vehicle speed, the steering angle, and the angular velocity of the steering angle of the vehicle 100.

Accordingly, even when the curvature of the course of the vehicle 100 gradually changes, the outer edge lines L of the road surface rendering patterns P1, P2 are easily displayed along the course of the vehicle 100.

The road surface rendering patterns P1 to P3 display guides that serve as references for positions through which the vehicle 100 is intended to pass. Specifically, since the road surface rendering patterns P1 to P3 each include two linear patterns having a constant width and displayed in front right and left of the vehicle 100, the vehicle 100 is guided to advance through centers of the two patterns.

Accordingly, an operator is less likely to misidentify the course when the vehicle 100 is traveling on a curve, and a burden at a time of steering the vehicle is reduced.

As illustrated in FIG. 1, the road surface rendering pattern P has two outer edge lines L, L' separated by the vehicle width B1 or more. Accordingly, it is easy for the operator of the vehicle 100 to recognize in which direction the vehicle 100 is intended to travel.

As illustrated in FIG. 1, the headlamp 60 includes the road surface rendering device 1 and a headlamp unit 10. The headlamp unit 10 illuminates an area in front of the vehicle 100. According to such a configuration, since the headlamp 60 accommodates the road surface rendering device 1 therein, the road surface rendering device 1 is provided in a space-saving manner.

As illustrated in FIG. 1, the headlamp unit 10 includes a low beam unit 70 and a high beam unit 80. The road surface rendering device 1 is located outward of the low beam unit 70 and the high beam unit 80 in a vehicle width direction. The road surface rendering pattern P has two outer edge lines L, L' separated by the vehicle width or more.

Since the road surface rendering device 1 is located outward of the low beam unit 70 and the high beam unit 80 in the vehicle width direction, it is easy to display the road surface rendering pattern P having the same width as a vehicle width. Accordingly, even when the vehicle 100 is traveling on a curve, a difference between the road surface rendering pattern P displayed on the road surface and an originally intended pattern is reduced.

### (Second Embodiment)

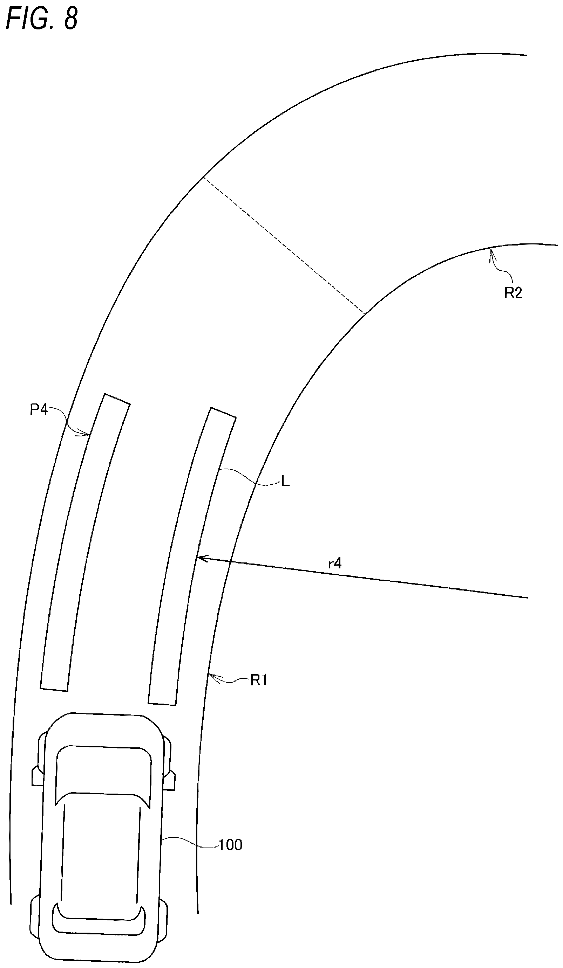

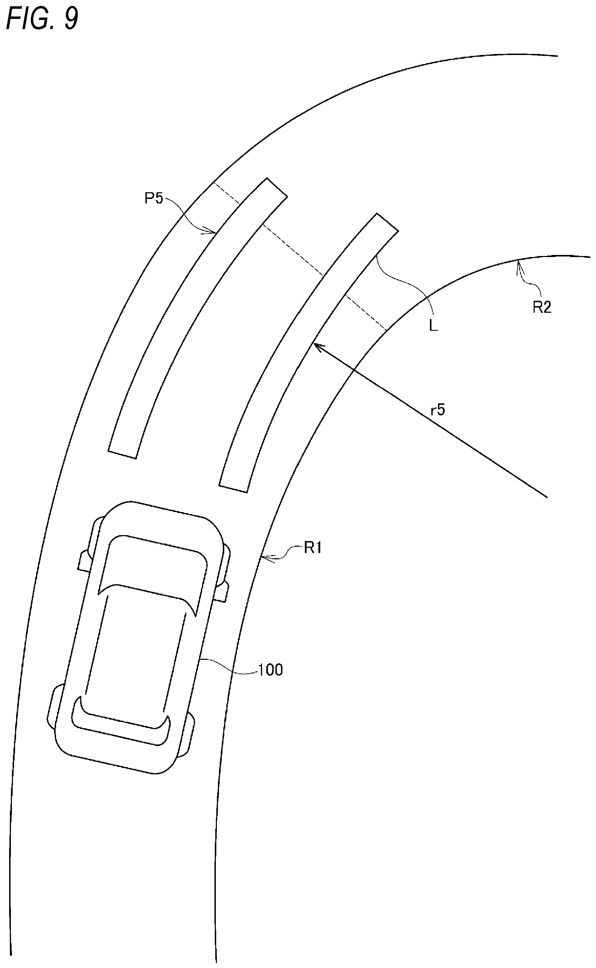

Next, road surface rendering patterns P4, P5 according to the second embodiment in the transition curve section R1 will be described with reference to FIGS. 8 and 9. FIG. 8 illustrates the road surface rendering pattern P4 according to the second embodiment in the transition curve section R1. FIG. 9 illustrates the road surface rendering pattern P5 according to the second embodiment in the transition curve section R1.

In the transition curve section R1, the road surface rendering patterns P1, P2 are configured such that the curvature of the outer edge line L increases or decreases in the forward direction of the vehicle 100. On the other hand, the road surface rendering patterns P4, P5 according to the second embodiment are configured such that the curvature of the outer edge line L is uniform also in the transition curve section R1.

When the angular velocity of the steering angle is smaller than the threshold, that is, when the vehicle 100 travels in the straight line section and the curve section R2, the outer edge line L has a uniform curvature according to the vehicle speed and the steering angle of the vehicle 100.

When the angular velocity of the steering angle is equal to or greater than the threshold, that is, when the vehicle 100 is traveling in the transition curve section R1, the outer edge line L has a uniform curvature different from the curvature of the outer edge line L when traveling in the straight line section and the curve section R2 in consideration of the angular velocity of the steering angle.

Specifically, in the example illustrated in FIG. 8, when the angular velocity of the steering angle is equal to or greater than the threshold, it is assumed that the radius of curvature of the course in accordance with the vehicle speed and the steering angle of the vehicle is r1. In this case, when the steering angle increases, the road surface rendering pattern P4 is displayed such that the radius of curvature of the outer edge line L satisfies r4 < r1.

As illustrated in FIG. 9, even if the radius of curvature of the course in accordance with the vehicle speed and the steering angle of the vehicle is r2 that satisfies r2 < r1, the road surface rendering pattern P5 is displayed such that the radius of curvature of the outer edge line L satisfies r5 < r4 and r5 < r2 when the steering angle increases.

Also in the road surface rendering patterns P4, P5 according to the second embodiment, when the angular velocity of the steering angle is equal to or greater than the threshold, the curvature of the curve extending in the forward direction of the vehicle 100 at the outer edge lines L of the road surface rendering patterns P4, P5 is different from the curvature determined according to the vehicle speed and the steering angle of the vehicle. Accordingly, the outer edge lines L of the road surface rendering patterns P4, P5 are easily displayed along the course of the vehicle 100.

Further, regardless of whether the angular velocity of the steering angle is larger or smaller than the threshold, curves that are the outer edge lines L of the road surface rendering patterns P4, P5 have a uniform curvature. For this reason, a configuration for displaying the road surface rendering patterns P4, P5 is easily simplified.

### (Modification 1)

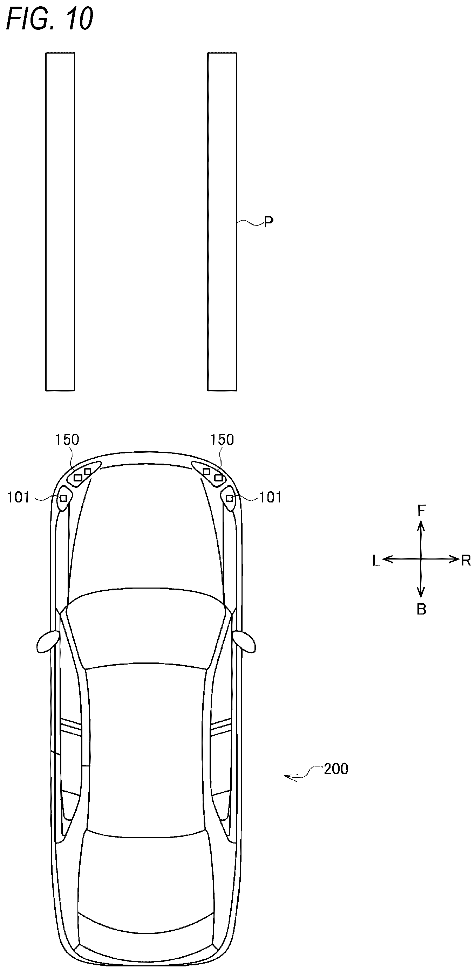

Next, a road surface rendering device 101 according to Modification 1 will be described. FIG. 10 illustrates the road surface rendering device 101 according to Modification 1. As illustrated in FIG. 10, the road surface rendering device 101 and a headlamp unit 150 are separately provided in a vehicle 200. The headlamp unit 150 can radiate a low beam and a high beam. The road surface rendering device 101 is located outward of the headlamp unit 150 in the vehicle width direction.

As described above, the road surface rendering device 101 according to Modification 1 is located outward of the headlamp unit 150 that can radiate the low beam and the high beam. For this reason, it is easy to display a road surface rendering pattern having outer edge lines separated by the vehicle width or more. Accordingly, even when the vehicle 200 is traveling on a curve, a difference between the road surface rendering pattern P displayed on the road surface and an originally intended pattern is reduced.

### (Modification 2)

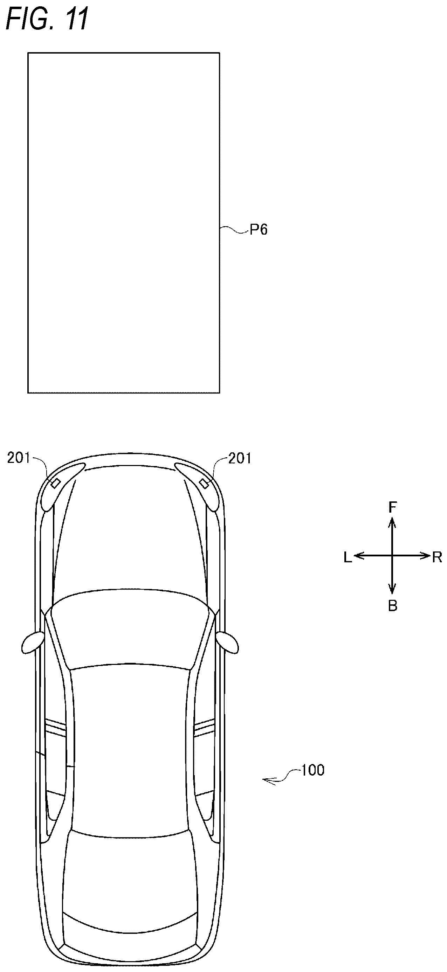

Next, a road surface rendering device 201 according to Modification 2 will be described. FIG. 11 illustrates the road surface rendering device 201 according to Modification 2. As in the road surface rendering device 201 according to Modification 2, a region between the outer edge lines L, L' in a road surface rendering pattern P6 may also be illuminated with light.

The present disclosure has been described above based on the embodiments. The present embodiments are examples of the present disclosure, and the present disclosure is not limited to the above-described embodiments and can be appropriately modified and improved. In addition, materials, shapes, dimensions, numerical values, forms, numbers, arrangement places, and the like of components in the above-described embodiments are freely selected and are not limited as long as the present disclosure can be implemented.

The present application claims the priority based on a Japanese patent application No. 2023-172994 filed on October 4, 2023, and all contents described in the Japanese patent application are incorporated.

## Claims

1. A road surface rendering device for vehicle that displays a road surface rendering pattern along a road in front of a vehicle on which the road surface rendering device is mounted, wherein
the road surface rendering pattern is configured to change according to a steering angle, a vehicle speed, and an angular velocity of the steering angle of the vehicle.

2. The road surface rendering device for vehicle according to claim 1, wherein
the road surface rendering pattern in accordance with the vehicle speed and the steering angle of the vehicle is displayed in a case where the angular velocity of the steering angle is smaller than a threshold, and
the road surface rendering pattern in accordance with the vehicle speed, the steering angle, and the angular velocity of the steering angle of the vehicle is displayed in a case where the angular velocity of the steering angle is equal to or greater than the threshold.

3. The road surface rendering device for vehicle according to claim 2, wherein
an outer edge line of the road surface rendering pattern includes a curve extending in a forward direction of the vehicle,
in a case where the angular velocity of the steering angle is smaller than the threshold, the curve has a constant curvature in accordance with the vehicle speed and the steering angle of the vehicle, and
in a case where the angular velocity of the steering angle is equal to or greater than the threshold, the curvature of the curve increases or decreases according to the vehicle speed, the steering angle, and the angular velocity of the steering angle of the vehicle, in the forward direction of the vehicle.

4. The road surface rendering device for vehicle according to claim 2, wherein
an outer edge line of the road surface rendering pattern includes a curve extending in the forward direction of the vehicle,
the curve has an uniform curvature according to the vehicle speed and the steering angle of the vehicle in a case where the angular velocity of the steering angle is smaller than the threshold, and
the curve has an uniform curvature different from the curvature in accordance with the vehicle speed and the steering angle of the vehicle in a case where the angular velocity of the steering angle is equal to or greater than the threshold.

5. The road surface rendering device for vehicle according to any one of claims 1 to 4, wherein
the road surface rendering pattern is configured to display a guide that serves as a reference for a position through which the vehicle is intended to pass.

6. The road surface rendering device for vehicle according to any one of claims 1 to 5, wherein
the road surface rendering pattern is configured to have two outer edge lines separated by a vehicle width or more.

7. The road surface rendering device for vehicle according to claim 6, wherein
the road surface rendering device is located outward of a headlamp unit configured to radiate a high beam and a low beam.

8. A vehicle headlamp comprising:
the road surface rendering device for vehicle according to any one of claims 1 to 7; and
a headlamp unit that illuminates an area in front of the vehicle.

9. The vehicle headlamp according to claim 8, wherein
the headlamp unit includes a low beam unit and a high beam unit,
the road surface rendering device for vehicle is located outward of the low beam unit and the high beam unit in a vehicle width direction, and
the road surface rendering pattern has two outer edge lines separated by a vehicle width or more.
